# EUROPEAN PATENT SPECIFICATION

(11) **EP 3 531 174 B1**
(45) Date of publication and mention of the grant of the patent: **02.12.2026**
(21) Application number: 17861871.6
(22) Date of filing: 20.10.2017
(51) Int. Cl.: G02B 5/18, B32B 7/02, B42D 25/328, B42D 25/324, B42D 25/45, G02B 27/42, G03H 1/26

(54) **LAMINATE AND BOOKLET**
LAMINAT UND HEFT
STRATIFIÉ ET LIVRET

(30) Priority: 21.10.2016 JP 2016206937
(43) Date of publication of application: 28.08.2019
(73) Proprietor: Dai Nippon Printing Co., Ltd., Tokyo 162-8001 (JP)
(72) Inventor: SATO, Jun, Tokyo 162-8001 (JP); AOYAMA, Yuko, Tokyo 162-8001 (JP)
(74) Representative: Müller-Boré & Partner Patentanwälte PartG mbB
(86) International application number: PCT/JP2017/038034
(87) International publication number: WO 2018/074595

(56) References cited:
- EP-A1- 2 264 491
- JP-A- 2005 297 449
- JP-A- 2010 139 629
- JP-A- 2014 004 752
- JP-A- 2015 009 405
- US-A1- 2013 056 972
- US-A1- 2013 056 972
- US-A1- 2015 129 780
- US-A1- 2015 251 480

## Description

### TECHNICAL FIELD

The present invention relates to a laminate and a booklet capable of optically functioning.

### BACKGROUND ART

In the related art, there is a security document in which a waveguide is embedded and light is caused to be incident on the waveguide and exit from a window (for example, Patent Document 1). However, in the security document in the related art, in order to make light incident on the waveguide, a separate incident window is necessary in addition to the exit window.

Patent Document 1: Japanese Patent No. 5559354

Document US 2015/251480 A1 describes an optical security component comprising an observation face and identifiable information, the component successively including, starting from the side opposite the observation face, a first support layer, identification elements obtained by printing an absorbent material in at least part of the visible spectrum, with a low refractive index, to reproduce at least part of the identifiable information, at least part of the identification elements being structured on one of their faces opposite the face across from the support layer, to form a first subwavelength grating, a second layer, with a high refractive index, covering the first support layer and the identification elements, and a third layer, with a low refractive index, transparent in the observation spectral band of the component.

Document EP 2,264,491 A1 describes a method for manufacturing a zero-order diffractive filter comprising a high-index material having an upper surface and a lower surface.

Document US 2013/056972 A1 describes a security element having a carrier substrate, at least one surface layer and a waveguide layer, wherein the waveguide layer has at least one area in which light is guided both laterally and vertically.

### DISCLOSURE OF THE INVENTION

### Problems to be Solved by the Invention

An object of the present invention is to provide a laminate and a booklet capable of optically functioning without the need of a separate incident window.

### Means for Solving the Problems

The present invention solves the problem by the following solving means. In order to facilitate understanding, reference numerals corresponding to embodiments of the present invention are given for the description, but the present invention is not limited thereto. In addition, configurations described with reference numerals may be modified as appropriate, and at least a part thereof may be replaced by another configuration.
· A first invention is a laminate including: a transparent layer (21, 15); an optical element layer (50, 250, 550) including a light guide layer arranged below the transparent layer, and an optical functional portion (52a) capable of performing an optical function on light arriving at the optical functional portion after the light passes through the light guide layer; and a reflection portion (13a, 313a, 413a) positioned outside the optical functional portion in top view and reflecting the light toward the inside of the light guide layer.

According to the invention the laminate further includes a transparent embedded member (31, 531) embedded in a resin layer (11, 12, 15, 21, 22) forming the laminate, in which the optical element layer (50, 250, 550) is disposed above the embedded member, and the reflection portion is a wall portion (13a, 313a, 413a) that surrounds the embedded member in the resin layer and is configured to be opaque or translucent.
· A second invention is the laminate of the first invention, in which the optical functional portion (52a) is a diffraction grating.
· A third invention is the laminate of the second invention, further including a high refractive index layer (53, 253) that covers the optical functional portion (52a) of the optical element layer (50, 250, 550) and has a higher refractive index than an optical functional portion forming layer forming the optical functional portion, in which a difference in refractive index between the optical functional portion forming layer and the high refractive index layer is large enough to exhibit a function of the diffraction grating (52a).
. A fourth invention is the laminate of any one of the first to third inventions, in which an external shape of the optical element layer (250) is larger than an external shape of an accommodating portion (13) in the top view, and the optical element layer is accommodated in the accommodating portion in a bent state.
. A fifth invention is the laminate of any one of the first to fourth inventions, in which the accommodating layer (11, 12) is formed by overlapping a plurality of resin sheets, and the reflection portion (413a) of the accommodating portion (413) includes a stepped portion (413d) having a reflection surface on an upper surface.
. A sixth invention is the laminate of any one of the first to fifth inventions, further including a reflection layer (412a) disposed below the optical element layer (50).
· A seventh invention is the laminate (301) of any one of the first to sixth inventions, in which at least a portion of sides constituting an external shape of the optical element layer in a state in which the optical element layer (50) is viewed in top view is exposed to the outside.
. An eighth invention is the laminate of any one of the first to seventh inventions, in which the laminate (1, 201, 301, 401, 501) is a card.
. A ninth invention is a booklet including: the laminate (1, 201, 301, 401, 501) of any one of the first to seventh inventions.

### Effects of the Invention

According to the present invention, a laminate and a booklet capable of optically functioning without the need of a separate incident window can be provided.

### BRIEF DESCRIPTION OF THE DRAWINGS

Fig. 1A is a view illustrating a card 1 of a first embodiment.
Fig. 1B is a view illustrating the card 1 of the first embodiment.
Fig. 2 is an enlarged view of the inside of the two-dot chain line (part indicated by arrow 2) of Fig. 1B.
Fig. 3 is a sectional view illustrating a method of manufacturing the card 1 of the first embodiment.
Fig. 4A is a view illustrating a card 201 of a second embodiment.
Fig. 4B is a view illustrating the card 201 of the second embodiment.
Fig. 5 is a sectional view illustrating a method of manufacturing the card 201 of the second embodiment.
Fig. 6A is a view illustrating a card 301 of a third embodiment.
Fig. 6B is a view illustrating the card 301 of the third embodiment.
Fig. 7 is a sectional view (view corresponding to Fig. 2) of a card 401 of a fourth embodiment.
Fig. 8A is a sectional view (view corresponding to Fig. 1B) of a card 501 of a fifth embodiment.
Fig. 8B is a sectional view (view corresponding to Fig. 3) illustrating the method of manufacturing the card 501 of the fifth embodiment.
Fig. 9 is an enlarged view of the inside of the two-dot chain line (part indicated by arrow 9) of Fig. 8A.

### PREFERRED MODE FOR CARRYING OUT THE INVENTION

### (Embodiments)

Hereinafter, embodiments of the present invention will be described with reference to the drawings and the like.

### (First Embodiment)

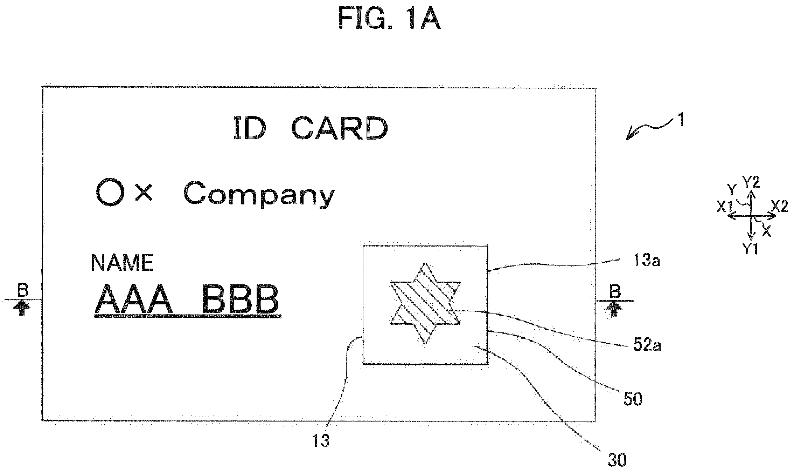

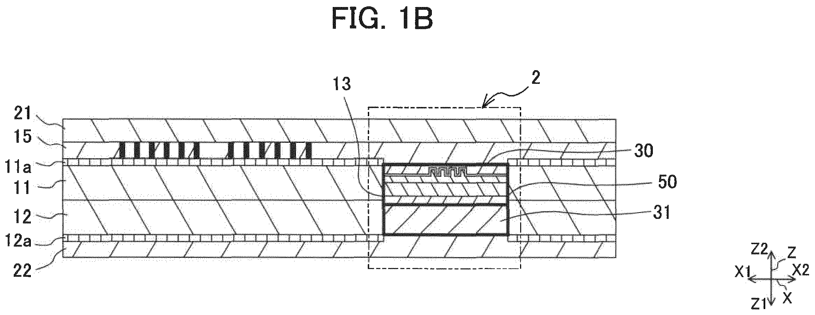

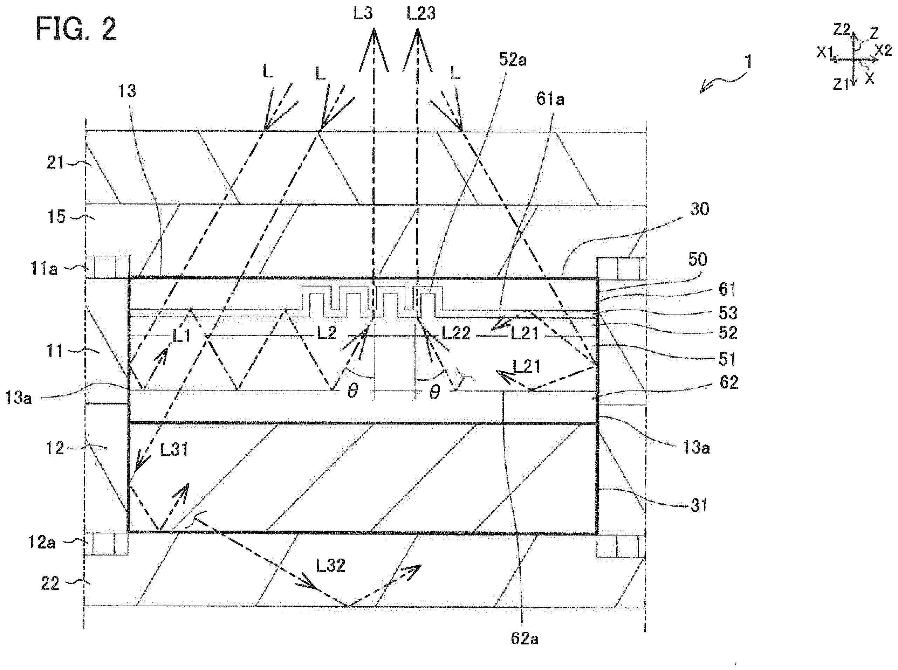

Figs. 1A and 1B are views illustrating a card 1 of a first embodiment. Fig. 1A is a view of the upper surface of the card 1 as viewed from the normal direction. Fig. 1B is a sectional view taken along line B-B of Fig. 1A. Fig. 2 is an enlarged view of the inside of the two-dot chain line (part indicated by arrow 2) of Fig. 1B. In order to facilitate description and understanding, an XYZ orthogonal coordinate system is provided in the embodiments and the drawings. This coordinate system represents a left-right direction X (left side X1 and right side X2), a longitudinal direction Y (lower side Y1 and upper side Y2), and a thickness direction Z with reference to the state of Fig. 1A. The thickness of each configuration is exaggeratedly illustrated as appropriate. The direction of the thickness direction Z (lower side Z1 and upper side Z2) is determined for convenience of description and does not limit the front and back sides of the card 1.

The card 1 (laminate) is used as, for example, an ID card. In the embodiment, the concept of the card is not limited to the ID card or the like, and widely includes a medium having the configuration of the laminate of the embodiment. For example, the card 1 includes a card used for a data page or the like of a passport by providing a non-contact communication IC chip, a loop antenna, a hinge, and the like. In this case, the external shape of the card 1 may be matched with the size of the passport or the like. Furthermore, the laminate may be used, for example, for a cash voucher and a ticket. The card 1 includes an upper base material 11, a lower base material 12, a laser coloring layer 15, an upper transparent layer 21, a lower transparent layer 22, and a transparent block 30. The upper transparent layer 21, the laser coloring layer 15, the upper base material 11, the lower base material 12, and the lower transparent layer 22 are laminated in this order from the upper side Z2 toward the lower side Z1. These members can be formed of a resin sheet material such as polycarbonate (PC), polyethylene terephthalate (PET), amorphous PET copolymer (PET-G), polyvinyl chloride (PVC) or the like. The combination of the resin sheet materials is not limited. For example, a light guide layer 51 (described later) may be formed of PET and the other layers may be formed of PC.

The upper base material 11 and the lower base material 12 constitute the base material of the card 1. In the embodiment, an example in which the base material of the card 1 has a two-layer structure will be described, but the base material is not limited thereto and may have a configuration having a single layer or three or more layers. The color of the upper base material 11 and the lower base material 12 is white. The upper base material 11 and the lower base material 12 respectively include an upper printed layer 11a and a lower printed layer 12a. The upper printed layer 11a and the lower printed layer 12a are respectively provided on the upper surface of the upper base material 11 and the lower surface of the lower base material 12. In the upper printed layer 11a, common information, that is, information common to card owners is printed. The common information is, for example, text information such as "ID CARD" and "OX Company", or a pattern (not illustrated) such as ground pattern. The upper printed layer 11a can be formed by, for example, offset printing. Similarly, the common information is also printed in the lower printed layer 12a. The information in the upper printed layer 11a is visually recognizable through the laser coloring layer 15 and the upper transparent layer 21. The information in the lower printed layer 12a is visually recognizable through the lower transparent layer 22.

In addition, the upper base material 11 and the lower base material 12 accommodate the transparent block 30 (accommodating layers). That is, the upper base material 11 and the lower base material 12 include an accommodating portion 13. The accommodating portion 13 is a hole that accommodates the transparent block 30. The accommodating portion 13 is provided continuously in the upper base material 11 and the lower base material 12. Although the shape of the accommodating portion 13 as viewed from the upper side Z2 is quadrangular, the shape is not limited thereto and may be, for example, circular. The inner surface of the accommodating portion 13 is a reflection wall 13a (reflection portion) that reflects light toward the inside of the transparent block 30. The reflection wall 13a has the color (that is, white color) of the upper base material 11 and the lower base material 12, and the transparent block 30 is transparent. Therefore, the light reflected at the reflection wall 13a, which is the interface between the upper base material 11 and the lower base material 12, and the transparent block 30, is reflected toward the inside of the transparent block 30 and then travels to the inside of the transparent block 30. Details of the travel of the light will be described later. In a state viewed from the upper side Z2, the reflection wall 13a is positioned outside a diffraction grating 52a (described later).

The laser coloring layer 15 is a layer having light-transmitting properties. The laser coloring layer 15 contains a color developer. Therefore, the range of the laser coloring layer 15 irradiated with laser light generates heat and develops in black, whereby laser marking is achieved. In the embodiment, the above color development is also referred to as "laser print, laser printing", or the like. The material of the laser coloring layer 15 may not contain a color developer as long as the laser coloring layer 15 develops color by being irradiated with laser light. The developed color may be other than black. In the laser coloring layer 15, individual information of the owner of the card is printed. In the example of Fig. 1, the individual information is the name "AAA BBB" of the card owner. The information laser-printed in the laser coloring layer 15 is visually recognizable through the upper transparent layer 21.

The upper transparent layer 21 is a layer having light-transmitting properties. The upper transparent layer 21 is a layer that protects the laser coloring layer 15 and the like. The lower transparent layer 22 is a layer similar to the upper transparent layer 21, has light-transmitting properties, and is a layer that protects the lower base material 12 and the like. The lower surface and the upper surface of the upper transparent layer 21 and the lower surface and the upper surface of the transparent layers may be provided with a printed layer as necessary. In this case, these printed layers are provided outside the installation range of the transparent block 30 in a state viewed from the upper side Z2. This is to prevent the light incident on the transparent block 30 from being disturbed. However, these printed layers may be provided within the installation range of the transparent block 30 as long as printed layers transmit light corresponding to the diffraction grating 52a (described later) of a diffraction grating forming layer 52. For example, in a case where the diffraction grating 52a diffracts the wavelength for green, these printed layers may be provided within the installation range of the transparent block 30 as long as the printed layers transmit the wavelength for green.

### (Transparent Block 30)

As illustrated in Fig. 2, the upper transparent layer 21 and the laser coloring layer 15 are disposed on the upper side Z2 of the transparent block 30, and the lower transparent layer 22 is disposed on the lower side Z1. The external shape (length in each of the left-right direction X, the longitudinal direction Y, and the thickness direction Z) of the transparent block 30 has a size that just fits in the accommodating portion 13. Accordingly, the transparent block 30 is embedded in the resin layers (the upper base material 11, the lower base material 12, the laser coloring layer 15, the upper transparent layer 21, and the lower transparent layer 22) forming the card. However, a form in which a slight gap is provided between the outer wall (surrounding wall portions) of the transparent block 30 and the reflection wall 13a of the accommodating portion 13 may be adopted. This is because, even in this form, the reflection wall 13a can reflect light toward the inside the transparent block 30.

The transparent block 30 includes an embedded member 31 and an optical element layer 50. The optical element layer 50 and the embedded member 31 are overlapped in this order from the upper side Z2 toward the lower side Z1. The embedded member 31 and the optical element layer 50 have light-transmitting properties. Therefore, the transparent block 30 is also transparent as a whole.

The embedded member 31 is formed of a single layer of a resin sheet material similar to the upper transparent layer 21 or the like, or a plurality of these layers. In a case where the embedded member 31 and the lower transparent layer 22 are made of materials that are hard to be thermally welded or the like, a heat seal layer (HS layer) may be provided on the lower surface of the embedded member 31.

The optical element layer 50 includes the light guide layer 51, the diffraction grating forming layer 52 (optical functional portion forming layer), a high refractive index layer 53, and HS layers 61 and 62. The HS layer 61, the high refractive index layer 53, the diffraction grating forming layer 52, the light guide layer 51, and the HS layer 62 are overlapped in this order from the upper side Z2 to the lower side Z1. The light guide layer 51 is formed of a sheet material similar to the upper transparent layer 21 and the like. As will be described later, the light guide layer 51 has a function of guiding light incident on the optical element layer 50 to the diffraction grating 52a of the diffraction grating forming layer 52.

In the diffraction grating forming layer 52, the diffraction grating 52a is formed. The diffraction grating 52a is formed by forming the upper surface of the diffraction grating forming layer 52 in an uneven shape. When viewed from the upper side Z2, the shape of the installation range of the diffraction grating 52a is a star shape (see Fig. 1A). The diffraction grating 52a causes light (also referred to as "arrival light") that has arrived at the diffraction grating 52a through the light guide layer 51 to exit toward the high refractive index layer 53. The diffraction grating 52a causes, in arrival light L2 and L22, light having an incident angle θ from the diffraction grating 52a to the high refractive index layer 53 and a specific wavelength to exit. The incident angle θ and the wavelength may have specific ranges. The wavelength of the exiting light varies depending on the period of the recesses and protrusions of the diffraction grating 52a. Accordingly, the diffraction grating 52a can cause light having a specific color (for example, green) to exit toward the high refractive index layer 53.

As described above, the diffraction grating 52a has an optical function of causing, in the arrival light L2 and L22, light having a specific incident angle θ and a specific wavelength to exit toward the high refractive index layer 53. In the embodiment, as an example, an example in which light having an incident angle θ with respect to the high refractive index layer 53 is diffracted so as to exit immediately toward the upper side Z2, that is, at an exit angle of 0° is described (see Fig. 2). Hereinafter, the diffracted light is also referred to as diffracted light.

The diffraction grating 52a can be formed, for example, by preparing a plate precursor having a periodic structure and shaping the plate precursor in the diffraction grating forming layer 52. As the material of the diffraction grating forming layer 52, a resin material that has been used for forming a relief type hologram or the like in the related art, for example, a cured product of a curable resin such as a resin, an ultraviolet curable resin, or an ionizing radiation curable resin, a thermoplastic resin, and the like can be used.

The high refractive index layer 53 is a thin film covering the upper surface of the diffraction grating forming layer 52. The refractive index of the high refractive index layer 53 is larger than the refractive index of the diffraction grating forming layer 52 and the refractive index of the HS layer 61. The high refractive index layer 53 can be formed, for example, by forming a material such as a metal such as Mg, Ti, Cr, Fe, Co, Ni, Cu, Zn, Ga, Ge, Se, Rb, Pd, Ag, Cd, In, Sn, Sb, Te, Au, Pb, or Bi, an oxide of the metal, or a sulfide of the metal such as ZnS on the diffraction grating forming layer 52 by a vacuum deposition method. As the materials of the diffraction grating forming layer 52 and the high refractive index layer 53, those having a difference in refractive index between the two so as to cause the diffraction grating 52a to sufficiently function may be appropriately selected.

The HS layer 61 is an adhesive layer for adhering the high refractive index layer 53 and the laser coloring layer 15 to each other. The HS layer 62 is an adhesive layer for adhering the light guide layer 51 and the resin layer to each other. The HS layers 61 and 62 are formed of a thermoplastic adhesive (polyester resin or the like).

### (Observation Aspect of Installation Range of Transparent Block 30)

An observation aspect of the installation range of the transparent block 30 in a state in which the card 1 is viewed from the upper side Z2 will be described. As illustrated in Fig. 2, light L incident on the upper transparent layer 21 from the outside of the card 1 passes from the upper transparent layer 21 and the laser coloring layer 15 through the HS layer 61, the high refractive index layer 53, the diffraction grating forming layer 52, and the light guide layer 51 of the transparent block 30, and arrives at the reflection wall 13a. In this case, stronger light may be incident using a pen-shaped light or the like. Furthermore, by increasing the incident angle to a certain extent, the light can reliably arrive at the reflection wall 13a and reliably reflect at interfaces 61a and 62a (described later). The light arriving at the reflection wall 13a travels, for example, as follows. In Fig. 2, refraction, reflection, and the like of light are schematically illustrated.
(1) In the light, light L1 reflected at the reflection wall 13a in the form of specular reflection is reflected at the interface 62a between the light guide layer 51 and the HS layer 62. Thereafter, the light L1 passes through the light guide layer 51, the HS layer 61, the diffraction grating forming layer 52, and the high refractive index layer 53 and is reflected at the interface 61a between the high refractive index layer 53 and the HS layer 61. By repeating these reflections, the arrival light L2 arrives at the diffraction grating 52a. In this case, since the high refractive index layer 53 has a larger refractive index than that of the HS layer 61, the condition of total reflection tends to be established between the high refractive index layer 53 and the HS layer 61.
(2) In the light, light L21 irregularly reflected at the reflection wall 13a is also reflected at the interface 62a between the light guide layer 51 and the HS layer 62 as in (1) and is also reflected at the interface 61a between the high refractive index layer 53 and the HS layer 61. By repeating these reflections, the arrival light L22 arrives at the diffraction grating 52a.

As described above, the light L1 and L21 reflected at the reflection wall 13a is guided to the inside of the light guide layer 51, the diffraction grating forming layer 52, and the high refractive index layer 53 and arrives at the diffraction grating 52a as the arrival light L2 and L22. In this case, since the reflection wall 13a is white, the reflection wall 13a can reflect more light. In practice, the travel of the light L1 and L21 inside the optical element layer 50 is complex. For example, the light L1 and L21 arrives at the diffraction grating 52a by being repeatedly reflected at the reflection wall 13a many times. Even in this case, since the reflection wall 13a is white, the reflection wall 13a can reflect more light.

Although the light passing through the light guide layer 51, the diffraction grating forming layer 52, and the high refractive index layer 53 has been described in (1) and (2), the travel of the light is also complex in the entire transparent block 30. In addition, the travel of the light is also complex in a range including the transparent block 30 and other transparent layers (the upper transparent layer 21, the laser coloring layer 15, the lower transparent layer 22, and the like). For example, the light travels as follows and arrives at the diffraction grating 52a.
· Light L31 entering the embedded member 31 is repeatedly reflected and refracted inside the entire transparent block 30 and then arrives at the diffraction grating 52a.
· The light L31 arrives at the diffraction grating 52a while being refracted, reflected, and the like at the upper surface of the upper transparent layer 21, the lower surface of the lower transparent layer 22, and the like.

Therefore, there may be cases where the embedded member 31 and other transparent layers (the upper transparent layer 21, the laser coloring layer 15, the lower transparent layer 22, and the like) function as a part of the light guide layer. Even in such a case, the reflection wall 13a also reflects more of the light. As a result, most of the light L entering the transparent block 30 is guided to the diffraction grating 52a. Therefore, the reflection wall 13a can increase the light intensity of the arrival light.

(3) In the arrival light L2 and L22 arriving at the diffraction grating 52a, light having an incident angle θ with respect to the high refractive index layer 53 is incident on the high refractive index layer 53 while being diffracted by the function of the diffraction grating 52a. For example, in a case where the arrival light L2 and L22 is white light and the diffraction grating 52a causes the wavelength for green to exit, the light having the wavelength for green in the arrival light L2 and L22 is incident on the high refractive index layer 53 as diffracted light. In this case, as described above, since the light intensity of the arrival light L2 and L22 is high, the light intensity of the diffracted light can also be increased.

In addition, since the diffraction grating forming layer 52 and the high refractive index layer 53 have the above-mentioned difference in refractive index, the diffraction grating 52a reliably exhibits its optical function. That is, unlike the embodiment, in a form in which the high refractive index layer 53 is not provided and the diffraction grating forming layer 52 and the HS layer 61 are in direct contact with each other, usually, a sufficiently large difference in refractive index between the diffraction grating forming layer 52 and the HS layer 61 cannot be obtained. The reason is that both are resin layers and have substantially the same refractive index. Therefore, this type of diffraction grating cannot reliably exhibit the optical function.

(4) After being incident on the HS layer 61, the diffracted light passes through the laser coloring layer 15 and the upper transparent layer 21 and exits toward the outside of the card 1, that is, into the air as light L3 and L23. Here, since the region excluding the installation range of the diffraction grating 52a is transparent, the space on the lower side Z1 below the card 1 is observed through the region. Thus, when the block is observed from the upper side Z2, the light L3 and L23 is observed in a star shape which is the installation range of the diffraction grating 52a. Since the light intensity of the diffracted light is high, the light L3 and L23 also increases in intensity. Therefore, the range of the star shape glows brightly and can be clearly observed.

In the above description, the form in which the light L is incident on the transparent block 30 from the upper side Z2 has been described. However, a form in which the light L is incident on the transparent block 30 from the lower side Z1 may be adopted. Even in this form, the light that has passed through the lower transparent layer 22 arrives at the reflection wall 13a and travels in the same manner as in (1) to (4). Therefore, in this form, when the transparent block 30 is observed from the upper side Z2, the installation range of the diffraction grating 52a can be clearly observed.

### (Manufacturing Method)

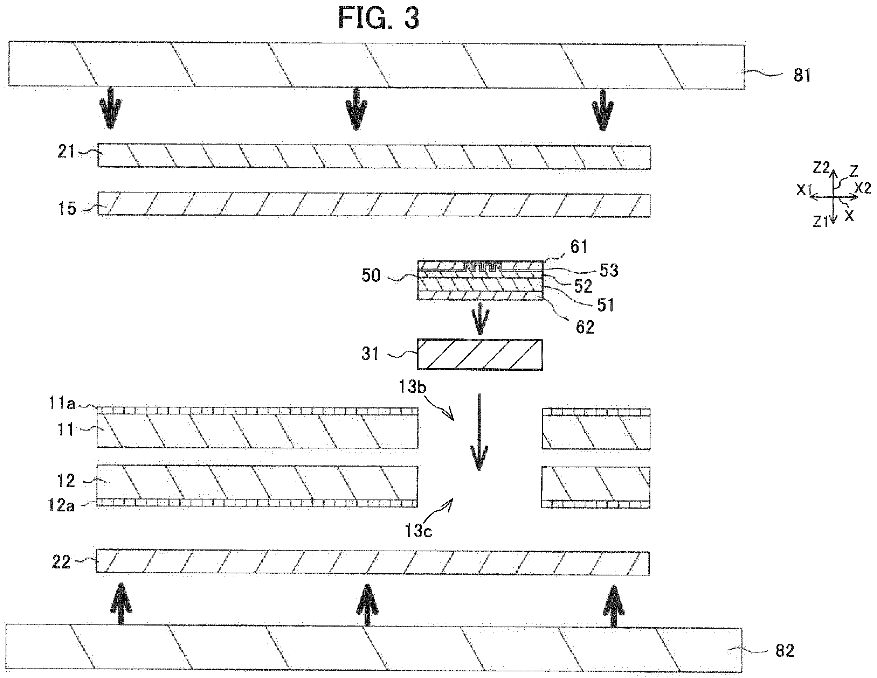

Fig. 3 is a sectional view illustrating a method of manufacturing the card 1 of the first embodiment. As illustrated in Fig. 3, the card 1 can be manufactured by hot pressing. However, as a preliminary step, the optical element layer 50, the embedded member 31, the upper base material 11, and the lower base material 12 are manufactured as follows. The optical element layer 50 can be manufactured by sequentially laminating the diffraction grating forming layer 52 and the high refractive index layer 53 on the light guide layer 51 and then forming the HS layers 61 and 62. The optical element layer 50 may be formed by manufacturing a single sheet in which a plurality of optical element layers are arranged (so-called multi-faced) in the surface direction (XY plane direction) and then dividing the single sheet into individual pieces by pressing or the like. In a case where the embedded member 31 has a multi-layer configuration, the layers are thermally welded to each other by hot pressing. Like the optical element layer 50, the embedded member 31 may also be formed by manufacturing a single sheet in which a plurality of the embedded members 31 are arranged in the surface direction and then dividing the single sheet into individual pieces. In the upper base material 11 and the lower base material 12, holes 13b and 13c forming the accommodating portion 13 are provided by press working or the like.

Thereafter, the step is followed by the following steps.
(1) As illustrated in Fig. 3, the upper base material 11 and the lower base material 12 are overlapped.
(2) The optical element layer 50 and the embedded member 31 are inserted into the holes 13b and 13c of the upper base material 11 and the lower base material 12. The optical element layer 50 and the embedded member 31 may be accommodated in the holes 13b and 13c after being processed into the form of the transparent block 30. In this case, for example, the temperature at which the HS layer 62 reveals adhesiveness may be lower than the temperature at which the HS layer 61 reveals adhesiveness. By selecting the HS layers 61 and 62 having such properties, the adhesiveness of only the HS layer 62 can be revealed at a low temperature and the optical element layer 50 and the embedded member 31 can be adhered to each other.
(3) In a state in which the optical element layer 50 and the embedded member 31 are inserted into the holes 13b and 13c, the upper transparent layer 21, the laser coloring layer 15, the upper base material 11, the lower base material 12, and the lower transparent layer 22 are overlapped in this order.
(4) The overlapped members as in (3) are sandwiched between hot press plates 81 and 82 and are hot pressed. Accordingly, the layers are thermally welded to each other. In this case, the laser coloring layer 15 and the high refractive index layer 53 are adhered to each other with the HS layer 61 interposed therebetween. In addition, the light guide layer 51 and the embedded member 31 are to each other with the HS layer 62 interposed therebetween.

In a case where the material of the transparent block 30 (the optical element layer 50 and the embedded member 31) and the materials of the upper base material 11 and the lower base material 12 are easily thermally welded to each other, the outer wall of the transparent block 30 and the reflection wall 13a of the accommodating portion 13 are thermally welded to each other. On the other hand, in a case where the material of the transparent block 30 and the materials of the upper base material 11 and the lower base material 12 are not thermally welded to each other, the outer wall of the transparent block 30 and the reflection wall 13a of the accommodating portion 13 are not thermally welded to each other. However, as described above, the reflection wall 13a may exhibit a function of guiding light to the inside of the transparent block 30 by reflecting light. Therefore, the outer wall of the transparent block 30 and the reflection wall 13a of the accommodating portion 13 may be thermally welded or may not be thermally welded to each other. Furthermore, these may be in close contact with each other, or may have a gap therebetween.

Also in the steps (1) to (4), a laminate in which members of a plurality of cards 1 are arranged in the surface direction may be manufactured and then divided into individual pieces, but a detailed description will be omitted. (5) When the card is issued, variable information is laser-printed by performing laser irradiation.

As described above, in the card 1 of this embodiment, since the light is reflected at the reflection wall 13a, the installation range of the diffraction grating 52a can be clearly observed. In addition, in the card 1, since the high refractive index layer 53 is provided in the block, even if the transparent block 30 is accommodated in the card 1, the function of the diffraction grating 52a can be reliably exhibited. Furthermore, in the card 1, since the light can be incident on the transparent block 30 itself provided with the diffraction grating 52a, it is unnecessary to provide a separate window through which light is incident. Therefore, the structure of the card 1 is simple.

Although the example in which the transparent block 30 includes the optical element layer 50 and the embedded member 31 is described, another transparent embedded member may be disposed on the optical element. That is, the transparent block 30 may have a form in which another embedded member, the optical element layer 50, and the embedded member 31 are arranged in this order. In this case, the transparent block 30 may be an assembly in which these layers are adhered together. Accordingly, the diffraction grating 52a of the optical element layer 50 is not exposed to the outside, and thus the diffraction grating 52a can be protected from being contaminated during handling (during storage, transporting, or the like) of a single component.

### (Second Embodiment)

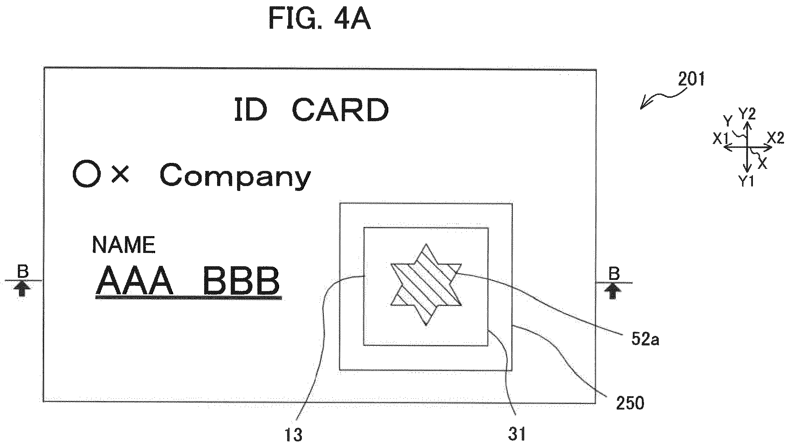

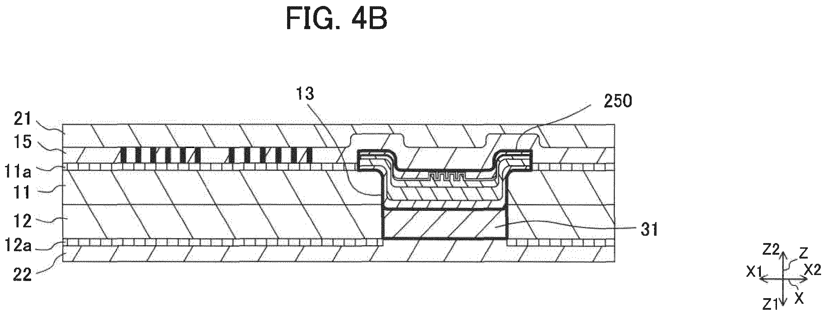

Next, a second embodiment of the present invention will be described. In the following description and the drawings, like elements which have the same function as those of the first embodiment are denoted by like reference numerals or the ends (last two digits) thereof are denoted by like reference numerals as appropriate, and an overlapping description will be omitted as appropriate. Figs. 4A and 4B are views illustrating a card 201 of the second embodiment. Fig. 4A is a view of the upper surface of the card 201 as viewed from the normal direction. Fig. 4B is a sectional view taken along line B-B of Fig. 4A. As illustrated in Fig. 4A, the external shape of an optical element layer 250 in a state viewed from the upper side Z2 (that is, in a XY plane) is one size larger than the external shape of the accommodating portion 13. Therefore, as illustrated in Fig. 4B, the optical element layer 250 is accommodated in the accommodating portion 13 in a bent state.

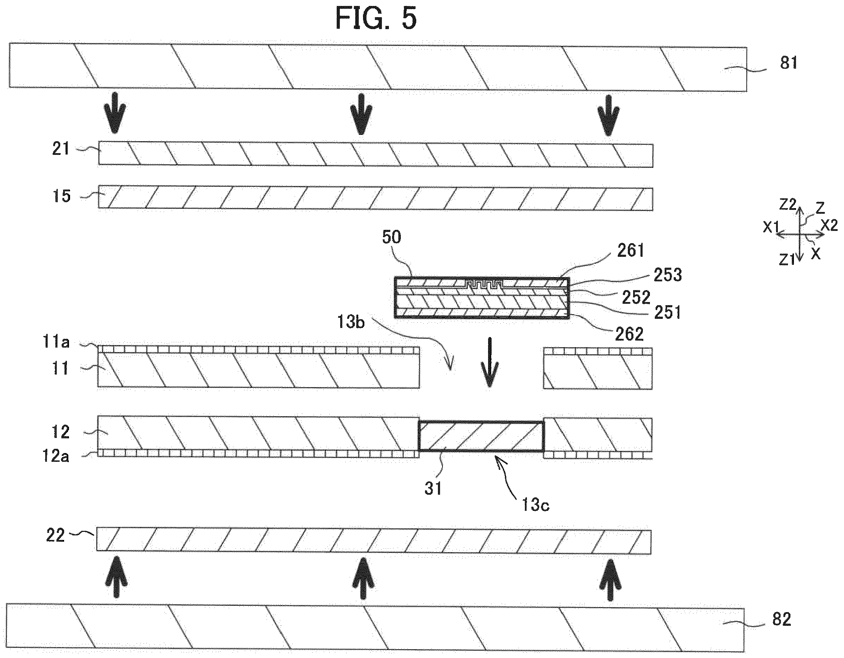

Fig. 5 is a sectional view illustrating a method of manufacturing the card 201 of the second embodiment. In the case of manufacturing the card 201, as in the first embodiment, in a state in which the upper base material 11 and the lower base material 12 are overlapped, the embedded member 31 is inserted into the hole 13b of the upper base material 11 and the hole 13c of the lower base material 12. Thereafter, the optical element layer 250 is placed on the upper base material 11 by a machine or the like. In this case, in the XY plane, the center of the optical element layer 250 and the center of the hole 13b of the upper base material 11 are aligned with each other. The subsequent steps are the same as in the first embodiment.

In this embodiment, in the case of the alignment, since the external shape of the optical element layer 250 is larger than the external shape of the hole 13b of the upper base material 11, positional deviation is not noticeable. Accordingly, the acceptable range of this positional deviation in the card 201 of this embodiment can be relieved, and thus workability during manufacturing is good.

Unlike this embodiment, in a form in which the external shapes of both are the same, there are cases where the optical element layer 250 is tight or loose against the hole 13b of the upper base material 11 due to processing error of each member or the like. Therefore, in this form, high processing accuracy is required. Contrary to this, the external shape of the optical element layer 250 of this embodiment is one size larger than the external shape of the accommodating portion 13, and thus the acceptable range of processing error of each member can be relieved.

### (Third Embodiment)

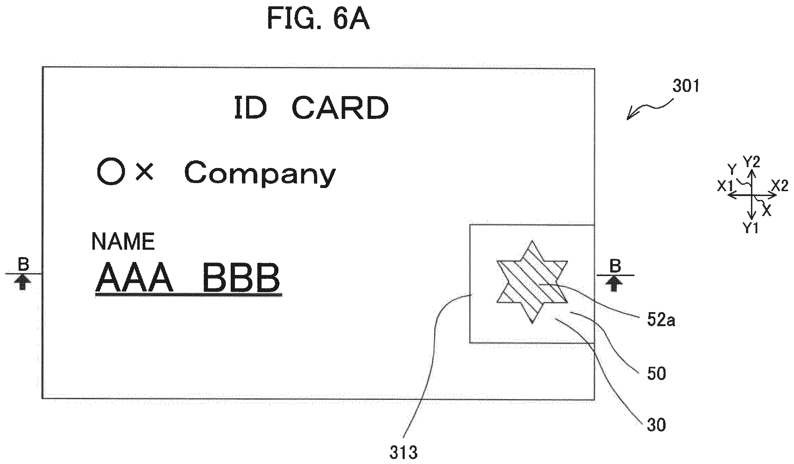

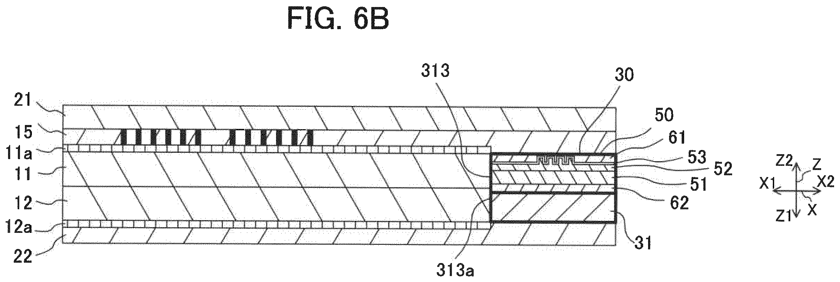

Figs. 6A and 6B are views illustrating a card 301 of a third embodiment. Fig. 6A is a view of the upper surface of the card 301 as viewed from the normal direction. Fig. 6B is a sectional view taken along line B-B of Fig. 6A. As illustrated in Fig. 6A, the transparent block 30 of this embodiment is provided at the edge of the right side portion of the card 301. Therefore, the right side portion of the transparent block 30 is exposed on the right side surface of the card 301. In addition, an accommodating portion 313 is not a hole, but a cutout shape provided at the right side portion of the upper base material 11 and the lower base material 12. Three side portions of the transparent block 30 are held by three inner side faces of the accommodating portion 313. The upper and lower surfaces of the transparent block 30 are respectively welded to the laser coloring layer 15 and the lower transparent layer 22. Accordingly, the accommodating portion 313 is reliably held inside the card 301.

Also in the above form, the three inner side faces of the accommodating portion 313 function as a reflection wall 313a. In addition, in the card 301, since the end portion of the transparent block 30 is exposed, light is directly incident on the transparent block 30. Accordingly, the intensity of the light incident on the transparent block 30 can be increased, so that the intensity of diffracted light can also be increased. Furthermore, the design of the card 301 can be improved.

Note that the arrangement of the transparent block 30 is not limited to the above, and a form in which a portion of the transparent block 30 is exposed from a side face of the card 301 may be adopted. For example, the transparent block 30 may be disposed at a corner portion of the card 301.

### (Fourth Embodiment)

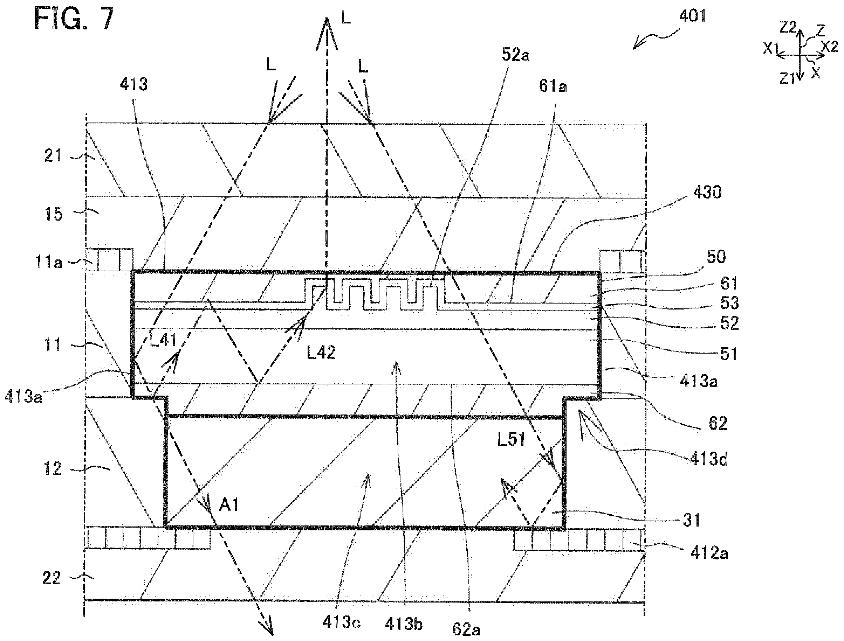

Fig. 7 is a sectional view (view corresponding to Fig. 2) of a card 401 of a fourth embodiment. In this embodiment, in a state before the upper base material 11 and the lower base material 12 are overlapped (not illustrated), the external shape of a hole 413b of the upper base material 11 is larger than the outer shape of a hole 413c of the lower base material 12. Therefore, as shown in Fig. 7, in a state in which the upper base material 11 and the lower base material 12 are overlapped, a reflection wall 413a of the accommodating portion 413 has a stepped portion 413d formed between a portion formed by the hole 413b of the upper base material 11 and a portion formed by the hole 413c of the lower base material 12.

Therefore, a portion of light L41 incident on a transparent block 430 is reflected at the flat surface (reflection surface) of the upper surface of the stepped portion 413d and does not exit to the lower side Z1. Therefore, in the card 401, since the light exiting to the lower side Z1 can be reduced, and the light intensity of arrival light L42 can be increased. That is, as indicated by arrow A1, in a form in which the stepped portion 413d is not provided, the light L41 exits toward the lower side Z1, so that the light intensity of the arrival light decreases.

In addition, a reflection layer 412a is formed on the lower surface of the transparent block 430. The reflection layer 412a can be formed, for example, by performing offset printing with white ink on the upper surface of the lower transparent layer 22, or depositing a metal, oxide, or the like. Like the stepped portion 413d, the reflection layer 412a also reflects light L51 incident on the transparent block 430 so as not to cause the light L51 to exit toward the lower side Z1.

As described above, since the card 401 of this embodiment includes the stepped portion 413d and the reflection layer 412a, the light intensity of the arrival light arriving at the diffraction grating 52a can be increased. Accordingly, the light intensity of the diffracted light can be increased.

The card 401 may include either one of the stepped portion 413d and the reflection layer 412a. The reflection layer 412a may be formed as follows.
· The reflection layer 412a may cover the entire surface of the embedded member 31. In this case, the light exiting toward the lower side Z1 can be reliably reflected.
· The reflection layer 412a may be formed of a white resin sheet or the like.
· The laminating position of the reflection layer 412a in the thickness direction Z is not limited as long as the laminating position is on the lower side Z1 below the optical element layer 50. For example, the reflection layer 412a may be provided between the optical element layer 50 and the embedded member 31.

### (Fifth Embodiment)

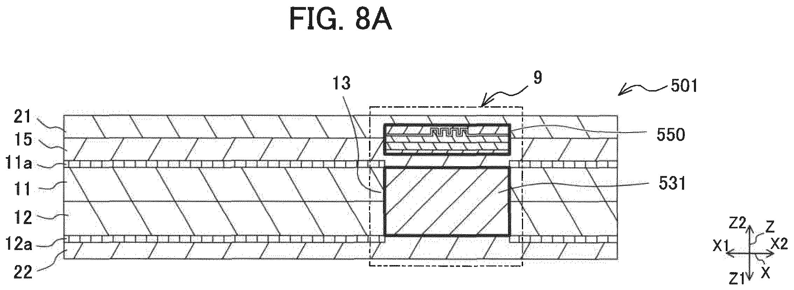

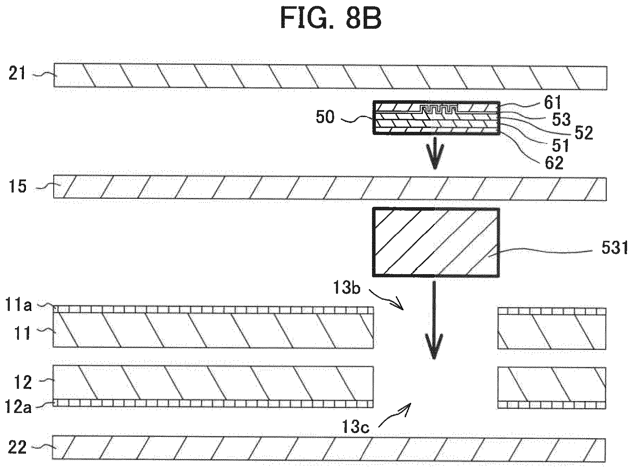

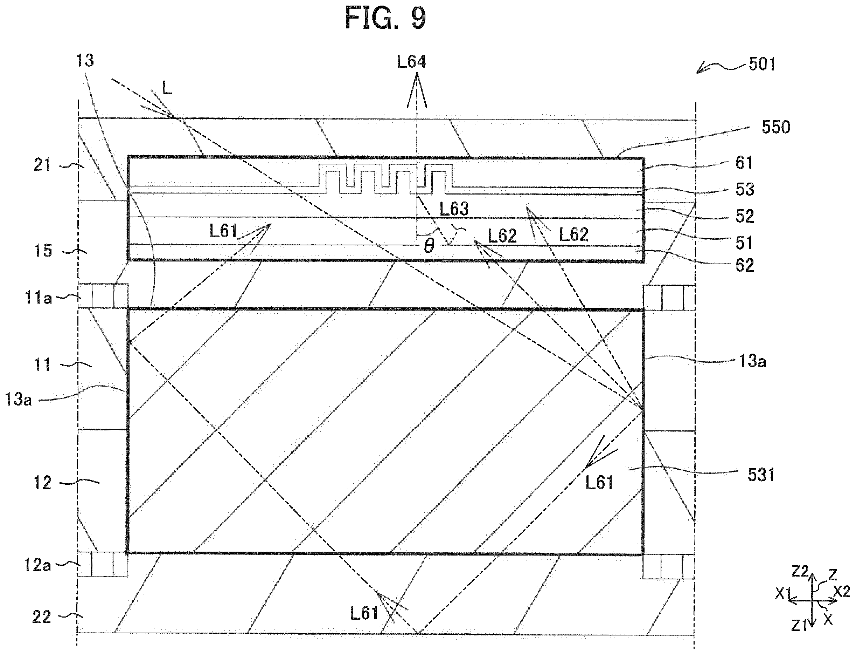

Fig. 8A is a sectional view (view corresponding to Fig. 1B) of a card 501 of a fifth embodiment. Fig. 8B is a sectional view (view corresponding to Fig. 3) illustrating a method of manufacturing the card 501 of the fifth embodiment. Fig. 9 is an enlarged view of the inside of the two-dot chain line (part indicated by arrow 9) of Fig. 8A. As illustrated in Fig. 8A, an optical element layer 550 of this embodiment is disposed between the upper transparent layer 21 and the laser coloring layer 15. The layer configuration of the optical element layer 550 is the same as that of the first embodiment (see Fig. 9). The thickness of an embedded member 531 is equal to the depth (the length in the thickness direction Z) of the accommodating portion 13.

With the above configuration, since the laser coloring layer 15 which is transparent is disposed between the optical element layer 550 and the embedded member 531, the optical element layer 550 and the embedded member 531 are separated from each other in the thickness direction Z. In addition, the embedded member 531 is accommodated in the accommodating portion 13, whereas the optical element layer 550 is not accommodated in the accommodating portion 13. In the thickness direction Z, the optical element layer 550 is positioned above the accommodating portion 13.

As illustrated in Fig. 8B, in a case where the card 501 is manufactured, only the embedded member 531 is inserted into the holes 13b and 13c of the upper base material 11 and the lower base material 12. On the upper base material 11, the laser coloring layer 15, the optical element layer 550, and the upper transparent layer 21 are overlapped in this order from the lower side toward the upper side, and the lower transparent layer 22 is overlapped under the lower base material 12. In this state, heat pressing is performed to adhere the layers to one another.

### (Observation Aspect of Installation Range of Optical Element Layer 550)

As illustrated in Fig. 9, light L incident on the upper transparent layer 21 from the outside of the card 501 passes from the upper transparent layer 21, the optical element layer 550, and the laser coloring layer 15 through the embedded member 531, and arrives at the reflection wall 13a. The light arriving at the reflection wall 13a travels, for example, as follows.
(1) In the light, light L61 reflected at the reflection wall 13a in the form of specular reflection is reflected at the lower surface of the lower transparent layer 22 (interface between the lower transparent layer 22 and the air). Thereafter, the light L61 is reflected at the reflection wall 13a on the opposite side (the left side in the figure), then passes through the laser coloring layer 15, and is incident on the optical element layer 550.
(2) In the light, light L62 irregularly reflected at the reflection wall 13a also passes through the laser coloring layer 15 and are incident on the optical element layer 550 as in (1). As in the first embodiment, the light L61 and L62 incident on the optical element layer 550 as in (1) and (2) is guided to the inside of the light guide layer 51, the diffraction grating forming layer 52, and the high refractive index layer 53 and arrive at the diffraction grating 52a as arrival light L63. Furthermore, in the arrival light L63, light having an incident angle θ with respect to the high refractive index layer 53 is incident on the high refractive index layer 53 while being diffracted by the function of the diffraction grating 52a and then exit toward the outside of the card 501 as light L64 as in the first embodiment. The travel of the light in the optical element layer 550, the embedded member 531, and other transparent layers (the upper transparent layer 21, the laser coloring layer 15, the lower transparent layer 22, and the like) is complex as described in the first embodiment. A large portion of the light that travels in such a complex manner is reflected at the reflection wall 13a. Accordingly, a larger portion of the light is guided to the diffraction grating 52a, so that the installation range of the diffraction grating 52a is bright and is clearly observed.

As described above, since the card 501 of this embodiment includes the reflection wall 13a, the light is reflected at the reflection wall 13a as in the first embodiment, and thus more light can be guided to the diffraction grating 52a. In the card 501 of this embodiment, the laser coloring layer 15 may be disposed on the upper side Z2 above the optical element layer 550. In this case, as in the first embodiment, the optical element layer 550 and the embedded member 531 are brought into direct contact with each other in the form of a transparent block.

While the embodiments of the present invention have been described above, the present invention is not limited to the above-described embodiments. For example, various modifications and changes can be made as in modification embodiments described below and the like, and these are also within the technical scope of the present invention. In addition, the effects described in the embodiments are merely listed as the most preferable effects caused by the present invention, and the effects of the present invention are not limited to those described in the embodiments. The above-described embodiment and modification embodiments described below can be used in combination as appropriate, and a detailed description thereof will be omitted.

### (Modification Embodiments)

(1) In the embodiments, an example in which the optical functional portion is the diffraction grating is described, but the optical functional portion is not limited thereto. The optical functional portion may be, for example, a fluorescent layer formed by applying fluorescent ink or the like. In this case, ultraviolet rays may be incident on the transparent block. Even in this case, the light intensity of the ultraviolet rays arriving at the fluorescent layer can be increased, so that the fluorescent layer glows brightly.
(2) In the embodiments, an example in which the optical element layer is disposed as the uppermost layer of the transparent block is described, but the optical element layer is not limited thereto. The optical element layer may be disposed in any layer of the transparent block. For example, a transparent resin layer may be disposed on both the upper side and the lower side of the optical element layer.
(3) In the embodiments, an example in which the color of the incident light and the colors of the reflection wall (colors of the upper base material and the lower base material) are both white is described, but the colors are not limited thereto. The combination of the colors can be selected as appropriate according to the function of the diffraction grating. For example, in a case where the diffraction grating functions at the wavelength for green, the combination of the colors may be set so that the arrival light includes the wavelength for green. Alternatively, the incident light may be white and the reflection wall may be green. In this case, the arrival light at the wavelength for green arrives at the diffraction grating. In addition, in the arrival light, light having an incident angle corresponding to the function of the diffraction grating can be diffracted and exit.
   Furthermore, in the embodiments, an example in which the colors of the upper base material and the lower base material themselves are white, that is, colors corresponding to the function of the diffraction grating is described, but the colors are not limited thereto. The reflection wall may be configured to reflect light regardless of the colors of the upper base material and the lower base material. For example, the upper base material and the lower base material may be transparent, and the reflection wall may be colored to a color corresponding to the function of the diffraction grating by coating or the like. Here, the color corresponding to the function of the diffraction grating indicates a color of a wavelength close to the wavelength of the light that can be diffracted by the diffraction grating. The color of the reflection portion may be a color different from the color corresponding to the function of the diffraction grating as described above, as long as the reflection portion is a wall portion configured to be opaque or translucent.
(4) In the embodiments, an example in which the high refractive index layer 53, the diffraction grating forming layer 52, and the light guide layer 51 are arranged from the upper side toward the lower side is described, but the arrangement is not limited thereto. A form in which the light guide layer 51, the diffraction grating forming layer 52, and the high refractive index layer 53 are arranged from the upper side toward the lower side may be adopted. In this form, the light guide layer 51 does not positively guide light but functions as a support base material for supporting the diffraction grating forming layer 52. In a case where the high refractive index layer 53 and the diffraction grating forming layer 52 are members that can be transferred to other layers,
   a form in which the light guide layer 51 is removed may be adopted. In these forms, the transparent layers (for example, the laser coloring layer, the transparent block, the embedded member, the lower transparent layer, and the like) disposed below the diffraction grating forming layer 52 and the high refractive index layer 53 function as the light guide layer. In these forms, the optical element layer is a concept of a member including the diffraction grating forming layer 52, the high refractive index layer 53, and the transparent layers.
(5) In the embodiments, an example in which the base materials and the like included in the card are resin sheet materials is described, but the base materials and the like are not limited thereto. For example, the base materials and the like included in the card may be paper materials.
(6) In the embodiments, an example in which the laminate constitutes the card is described. The laminate is not limited thereto, and for example, the laminate may constitute at least one page of a booklet having a plurality of pages.

### EXPLANATION OF REFERENCE NUMERALS

1, 201, 301, 401 CARD
11 UPPER BASE MATERIAL
12 LOWER BASE MATERIAL
13, 313, 413 ACCOMMODATING PORTION
13a, 313a, 413a REFLECTION WALL
13b, 13c, 413b, 413c HOLE
15 LASER COLORING LAYER
21 UPPER TRANSPARENT LAYER
22 LOWER TRANSPARENT LAYER
30, 430 TRANSPARENT BLOCK
31 EMBEDDED MEMBER
50, 250 OPTICAL ELEMENT LAYER
51, 251 LIGHT GUIDE LAYER
52, 252 DIFFRACTION GRATING FORMING LAYER
52a DIFFRACTION GRATING
53, 253 HIGH REFRACTIVE INDEX LAYER
61, 62, 261, 262 HS LAYER
412a REFLECTION LAYER
413d STEPPED PORTION

## Claims

1. A laminate comprising:
a transparent layer (21, 15);
a base material (11, 12) that includes an accommodating portion (13);
an optical element layer (50, 250, 550) including a light guide layer (51) arranged below the transparent layer (21, 15), and an optical functional portion (52a) capable of performing an optical function on light arriving at the optical functional portion (52a) after the light passes through the light guide layer;
the base material further including a reflection portion (13a, 313a, 413a) positioned outside the optical functional portion (52a) in top view and reflecting the light toward the inside of the light guide layer, and is arranged below the transparent layer (21, 15); and
further comprising:
a transparent embedded member (31, 531) embedded in the accommodating portion (13) of the base material (11, 12) in a resin layer (11, 12, 15, 21, 22) forming the laminate,
wherein the optical element layer (50, 250, 550) is disposed above the embedded member, and
the reflection portion (13a, 313a, 413a) is a wall portion (13a, 313a, 413a) that surrounds the embedded member in the accommodating portion (13) and is configured to be opaque or translucent.

2. The laminate according to claim 1,
wherein the optical functional portion (52a) is a diffraction grating.

3. The laminate according to claim 2, further comprising:
a high refractive index layer (53, 253) that covers the optical functional portion (52a) of the optical element layer (50, 250, 550) and has a higher refractive index than an optical functional portion (52a) forming layer forming the optical functional portion (52a),
wherein a difference in refractive index between the optical functional portion (52a) forming layer and the high refractive index layer (53, 253) is large enough to exhibit a function of the diffraction grating (52a).

4. The laminate according to any one of claims 1 to 3,
wherein an external shape of the optical element layer (250) is larger than an external shape of the accommodating portion accommodating the optical element layer (250) in the top view, and
the optical element layer (250) is accommodated in the accommodating portion (13) in a bent state.

5. The laminate according to any one of claims 1 to 4,
wherein the reflection portion (413a) of the accommodating portion (413) accommodating the optical element layer (250) includes a stepped portion (413d) having a reflection surface on an upper surface.

6. The laminate according to any one of claims 1 to 5, further comprising:
a reflection layer (412a) disposed below the optical element layer (50).

7. The laminate (301) according to any one of claims 1 to 6,
wherein at least a portion of sides constituting an external shape of the optical element layer (50) in a state in which the optical element layer (50) is viewed in top view is exposed to the outside.

8. The laminate (1, 201, 301, 401, 501) according to any one of claims 1 to 7,
wherein the laminate is a card.

9. A booklet comprising:
the laminate (1, 201, 301, 401, 501) according to any one of claims 1 to 7.

## Patentansprüche

1. Laminat, umfassend:
eine transparente Schicht (21, 15);
ein Basismaterial (11, 12), das einen Aufnahmeabschnitt (13) beinhaltet;
eine Optikelementschicht (50, 250, 550), die eine Lichtleiterschicht (51), die unterhalb der transparenten Schicht (21, 15) angeordnet ist, und einen optischen Funktionsabschnitt (52a) beinhaltet, der in der Lage ist, eine optische Funktion an Licht auszuführen, das an dem optischen Funktionsabschnitt (52a) ankommt, nachdem das Licht die Lichtleiterschicht passiert hat;
wobei das Basismaterial ferner einen Reflexionsabschnitt (13a, 313a, 413a) beinhaltet, der in Draufsicht außerhalb des optischen Funktionsabschnitts (52a) positioniert ist und das Licht zu der Innenseite der Lichtleiterschicht reflektiert und unterhalb der transparenten Schicht (21, 15) angeordnet ist; und
ferner umfassend:
ein transparentes eingebettetes Glied (31, 531), das in dem Aufnahmeabschnitt (13) des Basismaterials (11, 12) in einer Harzschicht (11, 12, 15, 21, 22), die das Laminat bildet, eingebettet ist,
wobei die Optikelementschicht (50, 250, 550) oberhalb des eingebetteten Glieds angeordnet ist, und
wobei der Reflexionsabschnitt (13a, 313a, 413a) ein Wandabschnitt (13a, 313a, 413a) ist, der das eingebettete Glied in dem Aufnahmeabschnitt (13) umgibt und konfiguriert ist, opak oder transluzent zu sein.

2. Laminat nach Anspruch 1,
wobei der optische Funktionsabschnitt (52a) ein Beugungsgitter ist.

3. Laminat nach Anspruch 2, ferner umfassend:
eine Schicht mit hohem Brechungsindex (53, 253), die den optischen Funktionsabschnitt (52a) der Optikelementschicht (50, 250, 550) bedeckt und einen höheren Brechungsindex aufweist als eine den optischen Funktionsabschnitt (52a) bildende Schicht, die den optischen Funktionsabschnitt (52a) bildet,
wobei ein Unterschied des Brechungsindex zwischen der den optischen Funktionsabschnitt (52a) bildenden Schicht und der Schicht mit hohem Brechungsindex (53, 253) groß genug ist, um eine Funktion des Beugungsgitters (52a) aufzuweisen.

4. Laminat nach einem der Ansprüche 1 bis 3,
wobei in der Draufsicht eine Außenform der Optikelementschicht (250) größer ist als eine Außenform des Aufnahmeabschnitts, der die Optikelementschicht (250) aufnimmt, und
die Optikelementschicht (250) in dem Aufnahmeabschnitt (13) in einem gebogenen Zustand aufgenommen ist.

5. Laminat nach einem der Ansprüche 1 bis 4,
wobei der Reflexionsabschnitt (413a) des Aufnahmeabschnitts (413), der die Optikelementschicht (250) aufnimmt, einen gestuften Abschnitt (413d) beinhaltet, der eine Reflexionsfläche bzw. -oberfläche an bzw. auf einer oberen Fläche bzw. Oberfläche aufweist.

6. Laminat nach einem der Ansprüche 1 bis 5, ferner umfassend:
eine Reflexionsschicht (412a), die unterhalb der Optikelementschicht (50) angeordnet ist.

7. Laminat (301) nach einem der Ansprüche 1 bis 6,
wobei zumindest ein Abschnitt von Seiten, die eine Außenform der Optikelementschicht (50) bilden, in einem Zustand, in dem die Optikelementschicht (50) in Draufsicht betrachtet wird, zu der Außenseite hin freiliegt.

8. Laminat (1, 201, 301, 401, 501) nach einem der Ansprüche 1 bis 7, wobei das Laminat eine Karte ist.

9. Broschüre, umfassend:
das Laminat (1, 201, 301, 401, 501) nach einem der Ansprüche 1 bis 7.

## Revendications

1. Stratifié comprenant :
une couche transparente (21, 15) ;
un matériau de base (11, 12) qui comporte une partie de logement (13) ;
une couche d'élément optique (50, 250, 550) comportant une couche de guidage de lumière (51) agencée sous la couche transparente (21, 15), et
une partie fonctionnelle optique (52a) capable de réaliser une fonction optique sur la lumière arrivant à la partie fonctionnelle optique (52a) après que la lumière a traversé la couche de guidage de lumière ;
le matériau de base comportant en outre une partie de réflexion (13a, 313a, 413a) positionnée à l'extérieur de la partie fonctionnelle optique (52a) en vue de dessus et réfléchissant la lumière vers l'intérieur de la couche de guidage de lumière, et est agencé sous la couche transparente (21, 15) ; et
comprenant en outre :
un élément intégré transparent (31, 531) intégré dans la partie de logement (13) du matériau de base (11, 12) dans une couche de résine (11, 12, 15, 21, 22) formant le stratifié,
dans lequel la couche d'élément optique (50, 250, 550) est disposé au-dessus de l'élément intégré, et
la partie de réflexion (13a, 313a, 413a) est une partie de paroi (13a, 313a, 413a) qui entoure l'élément intégré dans la partie de logement (13) et est conçue pour être opaque ou translucide.

2. Stratifié selon la revendication 1,
dans lequel la partie fonctionnelle optique (52a) est un réseau de diffraction.

3. Stratifié selon la revendication 2 comprenant en outre :
une couche à indice de réfraction élevé (53, 253) qui recouvre la partie fonctionnelle optique (52a) de la couche d'élément optique (50, 250, 550) et présente un indice de réfraction plus élevé qu'une couche de formation de partie fonctionnelle optique (52a) formant la partie fonctionnelle optique (52a),
dans lequel une différence d'indice de réfraction entre la couche formant la partie fonctionnelle optique (52a) et la couche à indice de réfraction élevé (53, 253) est suffisamment grande pour présenter une fonction du réseau de diffraction (52a).

4. Stratifié selon l'une quelconque des revendications 1 à 3,
dans lequel une forme externe de la couche d'élément optique (250) est plus grande qu'une forme externe de la partie de logement logeant la couche d'élément optique (250) en vue de dessus, et
la couche d'élément optique (250) est logée dans la partie de logement (13) dans un état plié.

5. Stratifié selon l'une quelconque des revendications 1 à 4,
dans lequel la partie de réflexion (413a) de la partie de logement (413) logeant la couche d'élément optique (250) comporte une partie étagée (413d) ayant une surface de réflexion sur une surface supérieure.

6. Stratifié selon l'une quelconque des revendications 1 à 5, comprenant en outre :
une couche de réflexion (412a) disposée sous la couche d'élément optique (50).

7. Stratifié (301) selon l'une quelconque des revendications 1 à 6,
dans lequel au moins une partie des côtés constituant une forme externe de la couche d'élément optique (50) dans un état dans lequel la couche d'élément optique (50) est vue de dessus est exposée à l'extérieur.

8. Stratifié (1, 201, 301, 401, 501) selon l'une quelconque des revendications 1 à 7,
dans lequel le stratifié est une carte.

9. Livret comprenant :
le stratifié (1, 201, 301, 401, 501) selon l'une quelconque des revendications 1 à 7.
